# EUROPEAN PATENT SPECIFICATION

(11) **EP 3 722 166 B1**
(45) Date of publication and mention of the grant of the patent: **01.03.2023**
(21) Application number: 20169177.1
(22) Date of filing: 10.04.2020
(51) Int. Cl.: B60T 13/22, B60T 8/32

(54) **BRAKING CIRCUIT FOR THE BRAKING OF A VEHICLE**
BREMSSYSTEM FÜRS BREMSEN EINES FAHRZEUGES
SYSTÈME DE FREINAGE POUR FREINER UN VÉHICULE

(30) Priority: 11.04.2019 IT 201900005632
(43) Date of publication of application: 14.10.2020
(73) Proprietor: SAFIM S.r.l., 41123 Modena (MO) (IT)
(72) Inventor: Mamei, Eronne, 41123 Modena (IT); Mamei, Enrico, 41123 Modena (IT); Mamei, Andrea, 41123 Modena (IT)
(74) Representative: Brunacci, Marco

(56) References cited:
- EP-A1- 0 648 658
- EP-A1- 2 974 926
- US-B1- 6 209 966

## Description

The present invention relates to a braking circuit for the braking of a vehicle.

In vehicles of known type, the use of braking circuits is known provided with spring-loaded brakes with hydraulic release (called SAHR). This type of brakes is characterized by the fact that the braking is deactivated and activated, respectively, after compression and release of the relevant spring.

In particular, these braking circuits of known type comprise a supply line for a pressurized work fluid, connected for example to a corresponding pump, a discharge line and valve means adapted to place selectively the spring-loaded brake in communication with the supply line and with the discharge line. The valve means are therefore movable between a release position, wherein the supply line is placed in communication with the spring-loaded brake to allow the compression of the latter and the consequent release of the brake, and a braking position, wherein the spring-loaded brake is placed in communication with the discharge line, as a result of which the spring expands so as to actuate the brake.

The valve means are provided with electrically-operated command means to displace them from the braking position to the release position.

More specifically, the valve means are, under normal operating condition, in the braking position, while they are switched to the release position as a result of the activation of the electrical command means.

The electrical command means are generally composed of a solenoid provided with a relevant winding.

These devices of known type do have some drawbacks.

In fact, in the event of a malfunction or breakage of the electrical command means, the valve means displace independently to the braking position, thus interrupting the vehicle's run.

The malfunction of the electrical command means can therefore lead to the undesired braking of the vehicle even if the fluid-operated system does not have any malfunction and can therefore perform its function properly.

A number of alternative solutions have been adopted to overcome this drawback.

Some of these alternative solutions involve the use of an enabling solenoid valve arranged in series with the valve means described above and independently energized.

In particular, a solution of known type requires that the enabling solenoid valve is normally open, in which case high energy is required to keep the brake released.

In an alternative solution, the enabling solenoid valve is of the normally closed type, however, it is necessary to switch the enabling solenoid valve to activate the braking.

EP 2 974 926 A discloses a braking system for a work vehicle which may generally include a hydraulically actuated brake, a tank containing hydraulic fluid and a brake valve fluidly connected between the tank and the hydraulically actuated brake. The brake valve may be movable between an on position and an off position for controlling a flow of the hydraulic fluid from the tank to the hydraulically actuated brake.

The main aim of the present invention is to devise a braking circuit which allows solving the aforementioned problems and in particular which allows keeping the brake deactivated in the case of an electrical malfunction and, at the same time, reducing the energy expenditure compared to known solutions.

Within this aim, one object of the present invention is to allow the brake to be manually deactivated in case of need.

Another object of the present invention is to devise a circuit that allows the service braking to be used as an emergency brake in case of need.

Another object of the present invention is to devise a braking circuit that allows overcoming the aforementioned drawbacks of the prior art in a simple, rational, easy, effective to use and low cost solution.

The aforementioned objects are achieved by the present braking circuit according to claim 1.

Other characteristics and advantages of the present invention will be more evident from the description of a preferred, but not exclusive, embodiment of a braking circuit, illustrated by way of an indicative, yet non-limiting example in the attached tables of drawings in which:
Figure 1 is a schematic representation of a braking circuit according to the invention, in a first embodiment;
Figure 2 is a schematic representation of a braking circuit according to the invention, in a second embodiment;
Figure 3 is a schematic representation of a braking circuit according to the invention, in a third embodiment;
Figure 4 is a schematic representation of a braking circuit according to the invention, in a fourth embodiment.

With particular reference to these figures, reference numeral 1 globally indicates a braking circuit for the braking of a vehicle.

The circuit 1 comprises at least one supply line 2 of a pressurized work fluid, e.g. connected to a pump P, at least one discharge line 3, at least one braking line 4 communicating with a braking device 5 and main valve means 6 which can be moved between a braking position, wherein they place the braking line 4 in communication with the discharge line 3, and a release position, wherein they place the braking line 4 in communication with the supply line 2.

Appropriately, the braking device 5 corresponds to the braking device of a selfpropelled vehicle.

More specifically, the main valve means 6 are interposed between the braking line 4 and the supply and discharge lines 2, 3.

Preferably, the braking device 5 is of the type of a spring-loaded brake with hydraulic release (SAHR), which is adapted to activate braking in said braking position. More in detail, this type of braking device 5 comprises a spring element 7 which, in home condition, causes the activation of a corresponding brake (not visible in detail in the figures). To release the brake, therefore, it is necessary to convey pressurized fluid along the braking line 4 so as to cause the compression of the spring element 7.

In an alternative embodiment, not shown in the figures, the braking line 4 corresponds to the additional line of a trailer-brake valve, of the type known to the technician in the sector.

The circuit 1 also comprises main command means 8 which can be operated to bring the main valve means 6 from the braking position to the release position. The main command means 8 are therefore adapted to switch the status of the main valve means 6 as a result of the activation by an operator.

Appropriately, first elastic means 9 are provided adapted to push the main valve means 6 towards the braking position. The main command means 8 therefore counteract the first elastic means 9 to move the main valve means 6 from the braking position to the release position.

According to the invention, the main command means 8 comprise first and second electrical command means, identified in the figures with reference numerals 8a and 8b respectively, operating on the main valve means 6 and actuatable independently to each other.

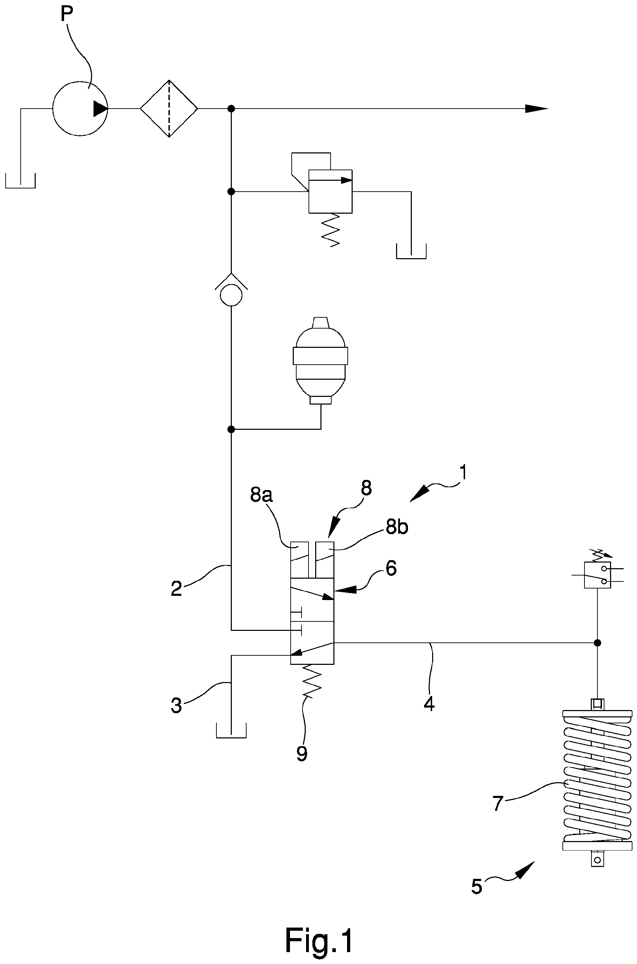

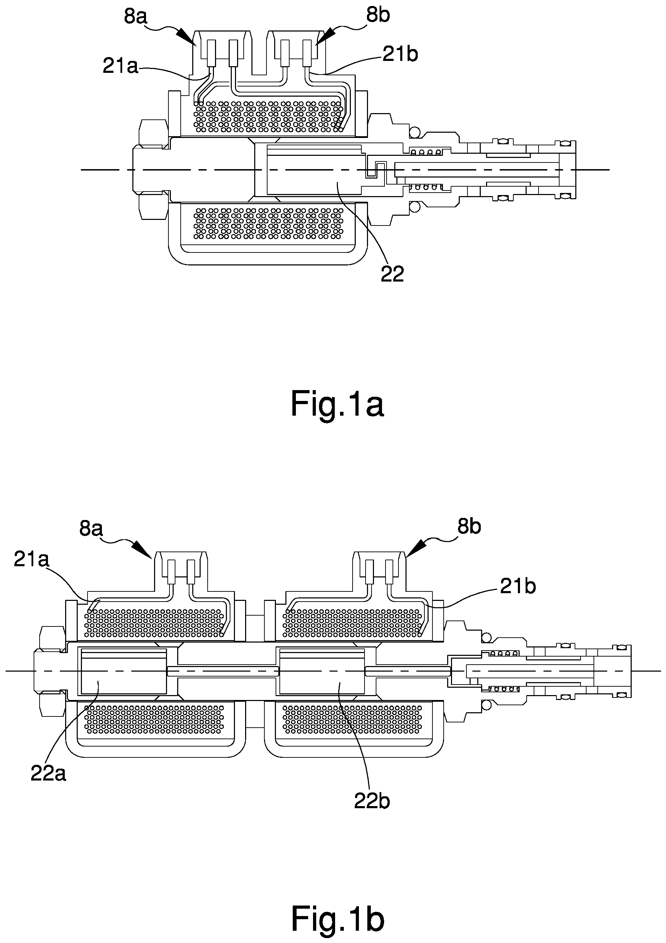

In the preferred embodiment shown in Figure 1a, the first and second command means 8a and 8b comprise a single solenoid adapted to actuate at least one movable core 22 connected to the main valve means 6 and a first and second winding, identified with reference numerals 21a and 21b, respectively, that can be activated independently to each other to move the movable core.

In an alternative embodiment, shown in Figure 1b, the first and second command means 8a and 8b each comprise a relevant solenoid provided with a relevant winding, 21a and 21b respectively, which, due to the passage of the current inside it, creates a magnetic field adapted to move the movable core, 22a and 22b respectively, of the relevant solenoid.

The force exertable by each of the first and second command means 8a and 8b is sufficient to keep the main valve means 6 in the release position and is insufficient to move the main valve means themselves from the braking position to the release position. This means that when the main valve means 6 are in the release position, any malfunction of one of the first and second command means 8a, 8b does not cause the main valve means 6 to switch to the braking position because the force exerted by the first or by the second command means 8a, 8b remaining active is sufficient to keep them in the release position. At the same time this allows reducing the energy consumption required to keep the main valve means 6 in the release position.

At the same time, when the main valve means 6 are in the braking position, the malfunction of one of either the first or the second command means 8a and 8b prevents these from switching to the release position.

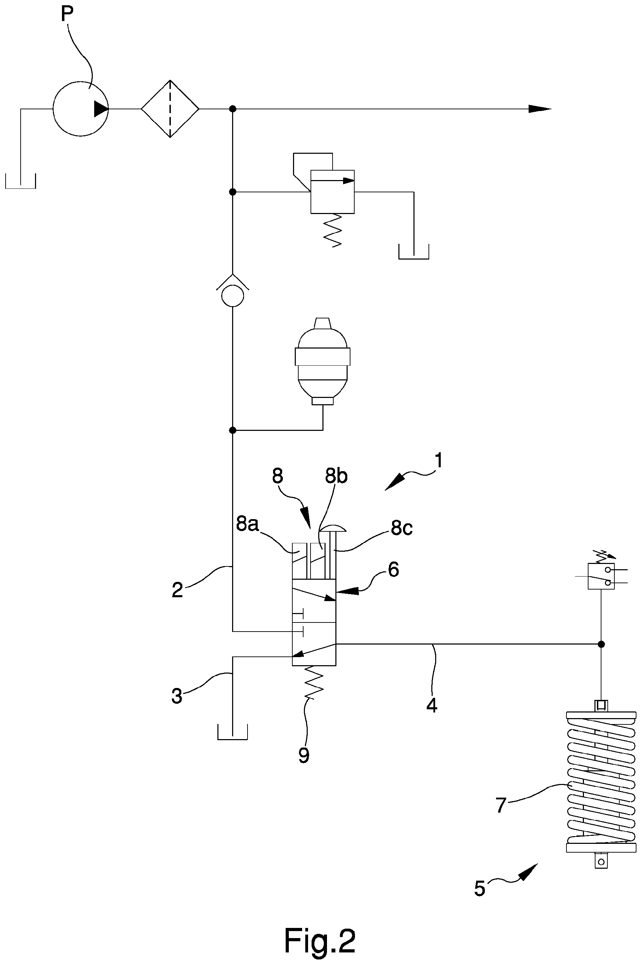

Appropriately, in the embodiment shown in Figure 2, the main command means 8 comprise at least one manual command 8c that can be actuated to move the main valve means 6 from the braking position to the release position. The manual command 8c, which may be of the type of a push-button manually actuated by an operator, therefore allows the main valve means 6 to be displaced from the braking position to the release position also in the event that one of either the first or the second command means 8a and 8b is malfunctioning but the operator verifies that the fluid-operated system is operational and able to operate correctly.

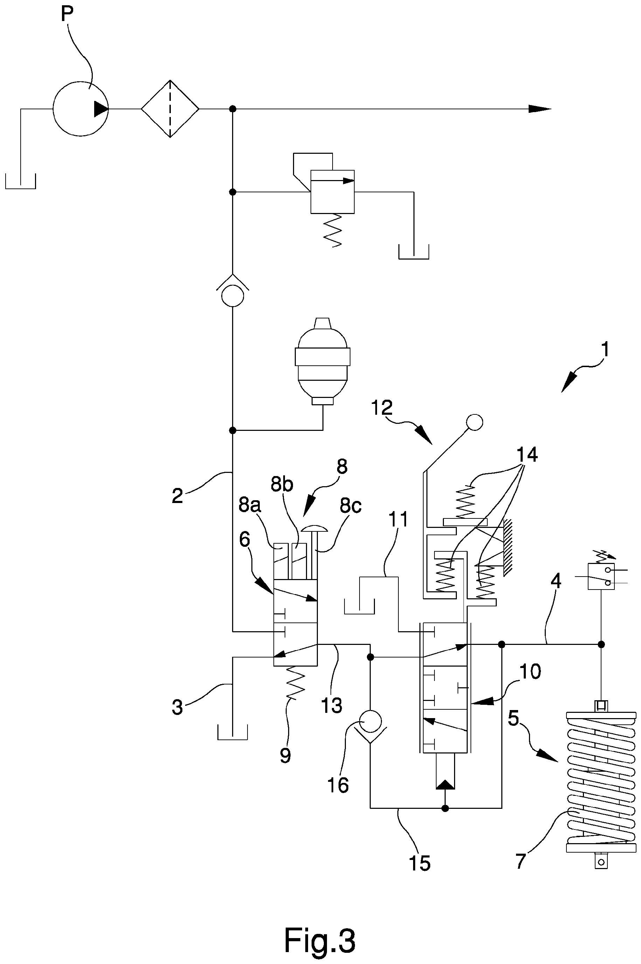

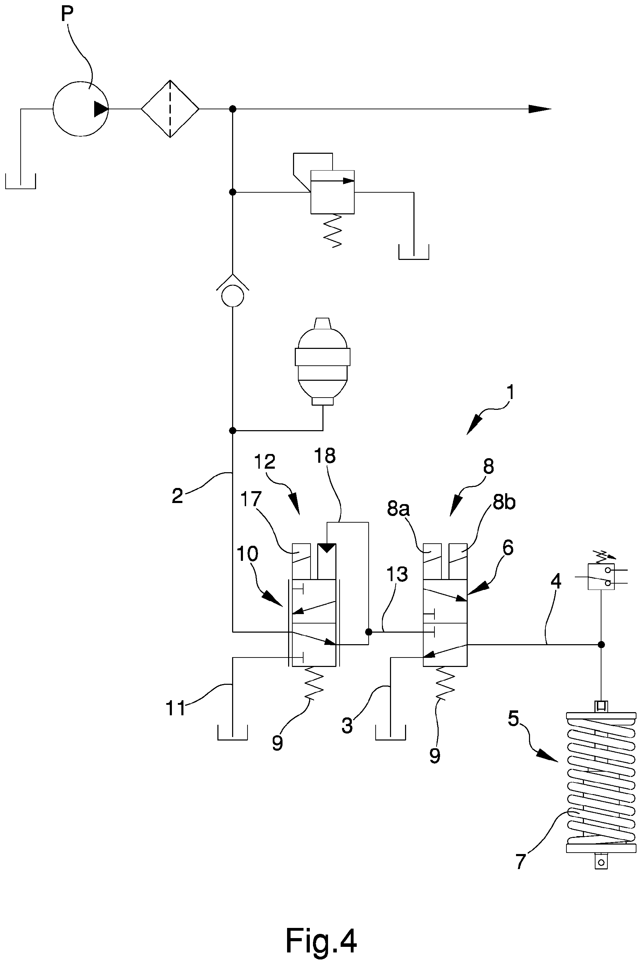

In the embodiments shown in Figures 3 and 4, the circuit 1 also comprises emergency valve means 10 arranged in series with the main valve means 6 and placed between the supply line 2 and the braking line 4, which are adapted to activate the emergency braking in case of need. At least one additional discharge line 11, which may be separate from or coincide with the discharge line 3, is also provided in these embodiments, and the emergency valve means 10 are movable between at least one home position, wherein they are adapted to allow the passage of the work fluid towards the braking line 4, and an emergency position, wherein they are adapted to allow the passage of the work fluid towards the additional discharge line 11.

In particular, in the home position, the emergency valve means 10 are able (the actual connection therebetween can also depend on the position of the main valve means 8) to place the supply line 2 in communication with the braking line 4 while in the emergency position they are adapted to allow the passage of the work fluid towards the additional discharge line 11.

In other words, in the home position, the emergency valve means 10 are adapted to insulate the additional discharge line 3 from the braking line 4, while in the emergency position they are adapted to insulate the supply line 2 from the braking line 4.

Preferably, the emergency valve means 10 are of the proportional type and the circuit 1 comprises emergency command means 12 that can be operated to displace the emergency valve means 10 from the home position to the braking position.

Conveniently, at least one connection line 13 is placed between the main valve means 6 and the emergency valve means 10.

In the embodiment shown in Figure 3, the emergency valve means 10 are placed between the main valve means 6 and the braking line 4. In this embodiment, the emergency valve means 10 are adapted to place the connection line 13 in communication with the braking line 4 in the home position and the braking line 4 with the additional discharge line 11 in the emergency position.

More particularly, the emergency valve means 10 also have an intermediate position with respect to the home and emergency positions, wherein the connection line 13, the braking line 4 and the additional discharge line 11 are insulated from each other.

In the embodiment shown in Figure 3, the emergency command means 12 are of the mechanical type. More specifically, the emergency command means 12 are of the type of a hand lever, on which a plurality of elastic elements 14 operate.

On the emergency valve means 10, on the opposite side of the emergency command means 12, a driving line 15 communicating with the braking line 4 operates.

Conveniently, at least one one-way valve 16 is located between the driving line 15 and the connection line 13, which valve is adapted to allow the flow of the work fluid towards the main valve means 6. This one-way valve 16 is adapted to allow the passage of the work fluid from the braking line 4 to the discharge line 3, if necessary, when the emergency valve means 10 are in the intermediate position during the transition from the home position to the emergency position.

In the embodiment shown in Figure 4, the main valve means 6 are placed between the emergency valve means 10 and the braking line 4 and the emergency valve means 10 are adapted to place the connection line 13 in communication with the supply line 2 in the home position and the connection line 13 with the additional discharge line 11 in the emergency position.

In this configuration, since the valve 6 is of the ON/OFF type (i.e. it has only two positions) it is not necessary to have a one-way valve.

In this embodiment, the emergency command means 12 are of the electro-hydraulic type. More specifically, the emergency command means 12 comprise at least one solenoid valve 17 and at least one driving line 18 communicating with the connection line 13 operating in parallel on the emergency valve means 10. On the emergency valve means, on the opposite side of the emergency command means 12, second elastic means 19 operate.

The operation of the present invention is as follows.

When the vehicle is stationary, both the first and second command means 8a and 8b are activated to allow the displacement thereof, so as to switch the status of the main valve means 6 from the braking position to the release position.

As a result of this switchover, the main valve means 6 place the supply line 2 in communication with the braking line 4, thus causing the spring element 7 to compress and, consequently, to release the brake.

Appropriately, when the main valve means 6 reach the release position, any malfunction of one of the command means 8a and 8b will not cause the main valve means 6 to return to the braking position, as the force exerted by the other of either the command means 8a or 8b is sufficient to keep them in the release position.

If, on the other hand, the malfunction occurs with the main valve means 6 in the braking position, the vehicle is then parked so that the malfunction does not lead to safety problems. If there is the manual command 8c (in the embodiments of Figures 2 and 4) it is possible to switch the status of the main valve means 6 and move the vehicle.

In the embodiments shown in Figures 3 and 4, the emergency valve means 10 allow the service brake to be used as an emergency brake if necessary.

More in detail, through the operation of the emergency command means 12 the operator is able to displace the emergency valve means 10 from the home position to the emergency position in order to allow the outflow of the work fluid towards the additional discharge line 11.

In the embodiment shown in Figure 3, as a result of the displacement of the emergency valve means 10 to the emergency position, the braking line 4 is placed in communication with the additional discharge line 11, thus allowing the expansion of the spring element 7 and the activation of the braking regardless of the position of the main valve means 6.

As shown in Figure 4, on the other hand, the activation of the emergency command means 12 causes that the connection line 13 is placed in communication with the additional discharge line 11. In this case, therefore, when the main valve means 6 are in the braking position, the corresponding brake is activated regardless of the position of the emergency valve means, while when the main valve means 6 are in the release position, the brake is activated only after the emergency valve means 10 have been displaced to the emergency position.

It has, in practice, been found that the described invention achieves the intended objects and, in particular, it is underlined that the braking circuit which the present invention relates to, makes it possible to avoid undesired braking of the vehicle in the event of malfunction of the electrical commands of the relevant valve means, while at the same time reducing energy expenditure.

In particular, the presence of two separate and independent command means that operate in parallel on the main valve means makes it possible to optimise energy expenditure and prevent undesired activation of braking in the event of malfunctioning of one of them.

## Claims

1. Braking circuit (1) for the braking of a vehicle, comprising:
- at least one supply line (2) of a pressurized work fluid;
- at least one discharge line (3);
- at least one braking line (4) communicating with a braking device (5) of a vehicle;
- main valve means (6) which can be moved between a braking position, wherein it places said braking line (4) in communication with said discharge line (3), and a release position, wherein it places said braking line (4) in communication with said supply line (2);
- main command means (8) which can be operated to bring said main valve means (6) from said braking position to said release position, where said main command means (8) comprise first and second electrical command means (8a, 8b) operating on said main valve means (6) and which can be operated independently to each other;
wherein the force exertable by each of said first and second command means (8a, 8b) is sufficient to keep said main valve means (6) in the release position and **characterized by** the fact that said force exertable by each of said first and second command means (8a, 8b) is insufficient to move said main valve means (6).

2. Circuit (1) according to claim 1, **characterized by** the fact that said first and second command means (8a, 8b) comprise a single solenoid adapted to operate at least one movable core connected to said main valve means (6) and a first and a second winding that can be activated independently to each other to move said movable core.

3. Circuit (1) according to one or more of the preceding claims, **characterized by** the fact that said main command means (8) comprise at least one manual command (8c) that can be operated to move said main valve means (6) from the braking position to the release position.

4. Circuit (1) according to one or more of the preceding claims, **characterized by** the fact that it comprises emergency valve means (10) arranged in series with said main valve means (6) and placed between said supply line (2) and said braking line (4), at least one additional discharge line (11) being provided, where said emergency valve means (10) can be moved between at least one home position, in which it is adapted to allow the passage of the work fluid towards said braking line (4), and an emergency position, in which it is adapted to allow the passage of the work fluid towards said additional discharge line (11).

5. Circuit (1) according to claim 4, **characterized by** the fact that said emergency valve means (10) is of the proportional type and by the fact that it comprises emergency command means (12) that can be operated to displace said emergency valve means (10) from the home position to the braking position.

6. Circuit (1) according to claim 4 or 5, **characterized by** the fact that it comprises at least one connection line (13) placed between said main valve means (6) and said emergency valve means (10).

7. Circuit (1) according to one or more of claims 4 to 6, **characterized by** the fact that said emergency valve means (10) is placed between said main valve means (6) and said braking line (4), and by the fact that it is adapted to place said connection line (13) in communication with said braking line (4) in the home position and said braking line (4) with said additional discharge line (11) in the emergency position.

8. Circuit (1) according to claim 7, **characterized by** the fact that said emergency command means (12) is of the mechanical type.

9. Circuit (1) according to claim 7 or 8, **characterized by** the fact that it comprises at least one one-way valve (16) located along said connection line (13) and adapted to allow the flow of the work fluid towards said main valve means (6).

10. Circuit (1) according to one or more of claims 4 to 6, **characterized by** the fact that said main valve means (6) is placed between said emergency valve means (10) and said braking line (4), and by the fact that said emergency valve means (10) is adapted to place said connection line (13) in communication with said supply line (2) in the home position and said connection line (13) with said additional discharge line (11) in the emergency position.

11. Circuit (1) according to claim 10, **characterized by** the fact that said emergency command means (12) is of electro-hydraulic type.

12. Circuit (1) according to one or more of the preceding claims, **characterized by** the fact that said braking device (5) is of the type of a spring-loaded brake with hydraulic release, the latter being adapted to activate braking in said braking position.

## Patentansprüche

1. Bremskreislauf (1) zum Bremsen eines Fahrzeugs, umfassend:
- mindestens eine Versorgungsleitung (2) für ein unter Druck stehendes Arbeitsfluid;
- mindestens eine Ablassleitung (3);
- mindestens eine Bremsleitung (4), die mit einer Bremsvorrichtung (5) eines Fahrzeugs verbunden ist,
- ein Hauptventilmittel (6), das zwischen einer Bremsstellung, in der es die Bremsleitung (4) mit der Ablassleitung (3) in Verbindung bringt, und einer Freigabestellung bewegt werden kann, in der es die Bremsleitung (4) mit der Versorgungsleitung (2) in Verbindung bringt,
- ein Hauptbetätigungsmittel (8), das betätigt werden kann, um das Hauptventilmittel (6) von der Bremsstellung in die Freigabestellung zu bringen, wobei das Hauptbetätigungsmittel (8) erste und zweite elektrische Betätigungsmittel (8a, 8b) umfasst, die auf das Hauptventilmittel (6) wirken und unabhängig voneinander betätigt werden können,
wobei die von jedem der ersten und zweiten Betätigungsmittel (8a, 8b) ausübbare Kraft ausreichend ist, um das Hauptventilmittel (6) in der Freigabestellung zu halten, und **dadurch gekennzeichnet, dass** die von jedem der ersten und zweiten Betätigungsmittel (8a, 8b) ausübbare Kraft nicht ausreichend ist, um das Hauptventilmittel (6) zu bewegen.

2. Kreislauf (1) nach Anspruch 1, **dadurch gekennzeichnet, dass** die ersten und zweiten Betätigungsmittel (8a, 8b) einen einzigen Elektromagneten umfassen, der ausgebildet ist, mindestens einen beweglichen Kern zu betätigen, der mit dem Hauptventilmittel (6) verbunden ist, und eine erste und eine zweite Wicklung, die unabhängig voneinander aktiviert werden können, um den beweglichen Kern zu bewegen.

3. Kreislauf (1) nach einem oder mehreren der vorhergehenden Ansprüche, **dadurch gekennzeichnet, dass** das Hauptbetätigungsmittel (8) mindestens ein manuelles Betätigungselement (8c) umfassen, das betätigt werden kann, um das Hauptventilmittel (6) von der Bremsstellung in die Freigabestellung zu bewegen.

4. Kreislauf (1) nach einem oder mehreren der vorhergehenden Ansprüche, **dadurch gekennzeichnet, dass** er ein Notventilmittel (10) umfasst, das in Reihe mit dem Hauptventilmittel (6) angeordnet und zwischen der Versorgungsleitung (2) und der Bremsleitung (4) angeordnet ist, wobei mindestens eine zusätzliche Ablassleitung (11) vorgesehen ist, wobei das Notventilmittel (10) zwischen mindestens einer Grundstellung, in der es den Durchfluss des Arbeitsfluids zu der Bremsleitung (4) zulässt, und einer Notstellung, in der es den Durchfluss des Arbeitsfluids zu der zusätzlichen Ablassleitung (11) zulässt, bewegt werden kann.

5. Kreislauf (1) nach Anspruch 4, **dadurch gekennzeichnet, dass** das Notventilmittel (10) vom Proportionaltyp ist und dass es ein Notbetätigungsmittel (12) umfasst, das betätigt werden kann, um das Notventilmittel (10) aus der Grundstellung in die Bremsstellung zu verstellen.

6. Kreislauf (1) nach Anspruch 4 oder 5, **dadurch gekennzeichnet, dass** er mindestens eine Verbindungsleitung (13) umfasst, die zwischen dem Hauptventilmittel (6) und dem Notventilmittel (10) angeordnet ist.

7. Kreislauf (1) nach einem oder mehreren der Ansprüche 4 bis 6, **dadurch gekennzeichnet, dass** das Notventilmittel (10) zwischen dem Hauptventilmittel (6) und der Bremsleitung (4) angeordnet ist, und dass es ausgebildet ist, in der Grundstellung die Verbindungsleitung (13) mit der Bremsleitung (4) und in der Notstellung die Bremsleitung (4) mit der zusätzlichen Ablassleitung (11) in Verbindung zu bringen.

8. Kreislauf (1) nach Anspruch 7, **dadurch gekennzeichnet, dass** das Notbetätigungsmittel (12) vom mechanischen Typ ist.

9. Kreislauf (1) nach Anspruch 7 oder 8, **dadurch gekennzeichnet, dass** er mindestens ein Einwegventil (16) umfasst, das entlang der Verbindungsleitung (13) angeordnet und ausgebildet ist, den Durchfluss des Arbeitsfluids zu dem Hauptventilmittel (6) zu ermöglichen.

10. Kreislauf (1) nach einem oder mehreren der Ansprüche 4 bis 6, **dadurch gekennzeichnet, dass** das Hauptventilmittel (6) zwischen dem Notventilmittel (10) und der Bremsleitung (4) angeordnet ist, und dass das Notventilmittel (10) derart ausgebildet ist, dass es in der Grundstellung die Verbindungsleitung (13) mit der Versorgungsleitung (2) und in der Notstellung die Verbindungsleitung (13) mit der zusätzlichen Ablassleitung (11) in Verbindung zu bringen.

11. Kreislauf (1) nach Anspruch 10, **dadurch gekennzeichnet, dass** das Notbetätigungsmittel (12) vom elektrohydraulischen Typ ist.

12. Kreislauf (1) nach einem oder mehreren der vorhergehenden Ansprüche, **dadurch gekennzeichnet, dass** die Bremsvorrichtung (5) vom Typ einer federbelasteten Bremse mit hydraulischer Freigabe ist, wobei letztere ausgebildet ist, ein Bremsen in der Bremsstellung zu aktivieren.

## Revendications

1. - Circuit de freinage (1) pour le freinage d'un véhicule, comprenant :
- au moins une ligne d'alimentation (2) d'un fluide de travail sous pression ;
- au moins une ligne de décharge (3) ;
- au moins une ligne de freinage (4) communiquant avec un dispositif de freinage (5) d'un véhicule ;
- un moyen distributeur principal (6) qui peut être déplacé entre une position de freinage, dans laquelle il place ladite ligne de freinage (4) en communication avec ladite ligne de décharge (3), et une position de desserrage, dans laquelle il place ladite ligne de freinage (4) en communication avec ladite ligne d'alimentation (2) ;
- un moyen de commande principal (8) qui peut être actionné pour amener ledit moyen distributeur principal (6) de ladite position de freinage à ladite position de desserrage, ledit moyen de commande principal (8) comprenant des premier et second moyens de commande électriques (8a, 8b) agissant sur ledit moyen distributeur principal (6) et qui peuvent être actionnés indépendamment l'un de l'autre ;
la force pouvant être exercée par chacun desdits premier et second moyens de commande (8a, 8b) étant suffisante pour maintenir ledit moyen distributeur principal (6) dans la position de desserrage, et **caractérisé par le fait que** ladite force pouvant être exercée par chacun desdits premier et second moyens de commande (8a, 8b) est insuffisante pour déplacer ledit moyen distributeur principal (6).

2. - Circuit (1) selon la revendication 1, **caractérisé par le fait que** lesdits premier et second moyens de commande (8a, 8b) comprennent un unique solénoïde agencé pour actionner au moins un obturateur mobile relié audit moyen distributeur principal (6) et des premier et second enroulements qui peuvent être activés indépendamment l'un de l'autre pour déplacer ledit obturateur mobile.

3. - Circuit (1) selon une ou plusieurs des revendications précédentes, **caractérisé par le fait que** ledit moyen de commande principal (8) comprend au moins une commande manuelle (8c) qui peut être actionnée pour déplacer ledit moyen distributeur principal (6) de la position de freinage à la position de desserrage.

4. - Circuit (1) selon une ou plusieurs des revendications précédentes, **caractérisé par le fait qu'**il comprend un moyen distributeur d'urgence (10) disposé en série avec ledit moyen distributeur principal (6) et placé entre ladite ligne d'alimentation (2) et ladite ligne de freinage (4), au moins une ligne de décharge supplémentaire (11) étant prévue, ledit moyen distributeur d'urgence (10) pouvant être déplacé entre au moins une position initiale, dans laquelle il est agencé pour permettre le passage du fluide de travail vers ladite ligne de freinage (4), et une position d'urgence, dans laquelle il est agencé pour permettre le passage du fluide de travail vers ladite ligne de décharge supplémentaire (11).

5. - Circuit (1) selon la revendication 4, **caractérisé par le fait que** ledit moyen distributeur d'urgence (10) est du type proportionnel et **par le fait qu'**il comprend un moyen de commande d'urgence (12) qui peut être actionné pour déplacer ledit moyen distributeur d'urgence (10) de la position initiale à la position de freinage.

6. - Circuit (1) selon la revendication 4 ou 5, **caractérisé par le fait qu'**il comprend au moins une ligne de liaison (13) placée entre ledit moyen distributeur principal (6) et ledit moyen distributeur d'urgence (10).

7. - Circuit (1) selon une ou plusieurs des revendications 4 à 6, **caractérisé par le fait que** ledit moyen distributeur d'urgence (10) est placé entre ledit moyen distributeur principal (6) et ladite ligne de freinage (4), et **par le fait qu'**il est agencé pour placer ladite ligne de liaison (13) en communication avec ladite ligne de freinage (4) dans la position initiale et ladite ligne de freinage (4) avec ladite ligne de décharge supplémentaire (11) dans la position d'urgence.

8. - Circuit (1) selon la revendication 7, **caractérisé par le fait que** ledit moyen de commande d'urgence (12) est du type mécanique.

9. - Circuit (1) selon la revendication 7 ou 8, **caractérisé par le fait qu'**il comprend au moins un clapet de non-retour (16) situé le long de ladite ligne de liaison (13) et agencé pour permettre l'écoulement du fluide de travail vers ledit moyen distributeur principal (6).

10. - Circuit (1) selon une ou plusieurs des revendications 4 à 6, **caractérisé par le fait que** ledit moyen distributeur principal (6) est placé entre ledit moyen distributeur d'urgence (10) et ladite ligne de freinage (4), et **par le fait que** ledit moyen distributeur d'urgence (10) est agencé pour placer ladite ligne de liaison (13) en communication avec ladite ligne d'alimentation (2) dans la position initiale et ladite ligne de liaison (13) avec ladite ligne de décharge supplémentaire (11) dans la position d'urgence.

11. - Circuit (1) selon la revendication 10, **caractérisé par le fait que** ledit moyen de commande d'urgence (12) est du type électro-hydraulique.

12. - Circuit (1) selon une ou plusieurs des revendications précédentes, **caractérisé par le fait que** ledit dispositif de freinage (5) est du type frein à ressort à desserrage hydraulique, ce dernier étant agencé pour activer le freinage dans ladite position de freinage.
